(19) Europäisches Patentamt

European Patent Office

Office européen des brevets

(11) **EP 1 367 708 A2**

(12) **EUROPEAN PATENT APPLICATION**

(43) Date of publication:
**03.12.2003 Bulletin 2003/49**

(51) Int Cl.⁷: **H02P 6/08**

(21) Application number: **03011887.1**

(22) Date of filing: **27.05.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **27.05.2002 JP 2002152848**

(71) Applicant: **MATSUSHITA ELECTRIC INDUSTRIAL CO., LTD.**
**Kadoma-shi, Osaka 571-8501 (JP)**

(72) Inventor: **Matsui, Keizo**
**Otsu-shi, Shiga 520-2101 (JP)**

(74) Representative: **Eisenführ, Speiser & Partner**
**Patentanwälte Rechtsanwälte**
**Postfach 10 60 78**
**28060 Bremen (DE)**

(54) **Motor driving apparatus**

(57) A motor driving apparatus includes current detecting means (7a, 7b) for detecting a current flowing in a motor (4), current control means (12) for controlling the current flowing in the motor (4) to a predetermined value with reference to the detected current, and current control gain adjusting means (16) for changing a control gain in the current control means (12) according to an amplitude of the current flowing in the motor (4).

Fig.1

EP 1 367 708 A2

## Description

The present invention relates to a motor driving apparatus for driving a motor such as brushless DC motor at an arbitrary rotational speed.

Recently, in an apparatus for driving a motor such as compressor in air conditioner, there is an increasing demand for reducing power consumption from the viewpoint of protection of global environment. As one of such energy-saving technologies, it is widely proposed to user an inverter for driving a motor of high efficiency such as brushless DC motor at an arbitrary frequency.

As one of such driving technologies, developed is a method including detecting a current flowing in the winding of a motor by a current sensor, estimating the position of the rotor of the motor by using the detected current (estimation of the rotor position is conducted by estimating an induced voltage of the motor, as disclosed in Japanese Laid-open Patent Publication No. 2000-350489), and performing a sine wave driving. In such a method, driving of high efficiency and low noise can be realized. Further, to control the output torque of the motor at higher speed and more securely, it has been in practical use of a driving technology having a current control loop for controlling the current flowing in the motor by using the detected current.

In a motor driving system for controlling a motor such as the brushless DC motor by a current control loop, the current flowing in the winding of the motor varies significantly depending on the changes of the motor load, and the characteristic of the magnetic buried in the rotor of the brushless DC motor changes, and thus the current control is not stable. For example, it may be stable while the load is low, but as the load increases, the current may fall in an oscillation state. Otherwise it may be stable while the load is high, but as the load decreases, the precision of current control may be worse.

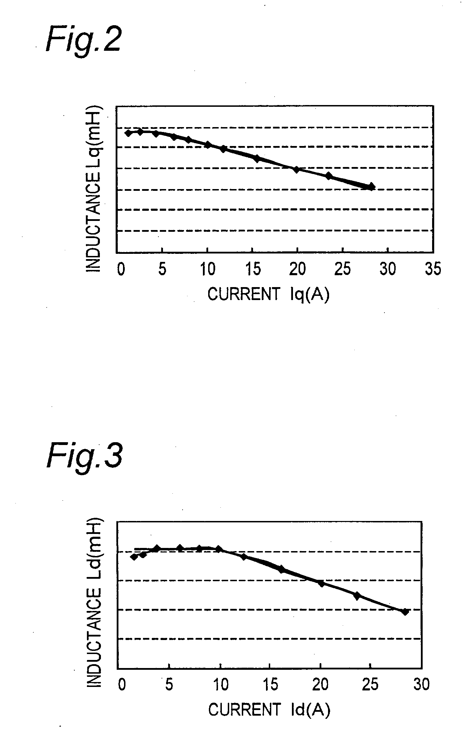

Such phenomena occur as a result of change of dynamic characteristic of the motor due to increase of magnetic flux of the brushless DC motor or magnetic saturation. Fig. 2 and Fig. 3 show examples of changes of inductance value with respect to the load current of brushless DC motor. These are measurements of changes of the inductance value with respect to the current in the direction of q-axis of the magnetic flux direction by the magnet of the motor and its orthogonal d-axis direction. As known from these diagrams, the characteristic of the brushless DC motor changes by the load current, and the change of the characteristic amount increases as the load current is larger. By the change of the characteristic value, the characteristic of the current control is varied.

Incidentally, in a position sensorless driving system of estimating the position of the rotor of the motor and performing synchronous operation, the output pulse width becomes smaller if the carrier frequency is set too high upon start, and sufficient starting torque is not obtained. In particular, the longer the dead time that is a time of turning off both upper and lower switching elements to avoid simultaneous conduction of switching elements of the upper and lower arms, the greater is the effect of increase in carrier frequency, and hence the starting torque declines. Further, in sensorless position estimation, the position can not be estimated smoothly due to small pulse width. That is, when the carrier frequency is set larger, the starting performance is deteriorated.

In driving of brushless DC motor, when controlling the current phase angle, it has been proposed and been in practical use to set the current phase angle at the optimum phase angle for maximizing the motor efficiency. For example, in a method proposed in Japanese Laid-open Patent Publication No. 2001-119978, the current phase angle to the winding current of the motor for maximizing the efficiency is calculated, and hence optimization is realized. However, since the load current fluctuates significantly upon start, selection of an optimum current phase angle causes the current phase angle to vary to cause instability upon start. Further if the current phase angle is set at an optimum value, when the current phase angle changes largely, the torque fluctuation increases and the driving is unstable.

The invention is devised to solve these problems, and it is hence an object thereof to provide a motor driving apparatus capable of controlling the torque of the motor stably even if the motor load fluctuates largely, and starting stably with the high carrier frequency in ordinary operation or with optimized efficiency.

According to a first aspect of the invention, provided is a motor driving apparatus including current detecting means for detecting a current flowing in a motor, current control means for controlling the current flowing in the motor to a predetermined value with reference to the detected current, and current control gain adjusting means for changing a control gain in the current control means according to an amplitude of the current flowing in the motor. Hence, even if the load current fluctuates significantly, stable current control of the motor can be achieved.

According to a second aspect of the invention, provided is a motor driving apparatus including a plurality of switching elements for generating a voltage for driving a motor, base driver for driving the plurality of switching elements, voltage output means for sending on and off signals for driving the switching elements to the base driver, and carrier frequency changeover means for sending a carrier frequency for changing over on and off operations of the switching elements to the voltage output means. The carrier frequency changeover means determines the carrier frequency at a first frequency for a predetermined time after start of the motor, and determines the carrier frequency at a second frequency after the predetermined time. Hence, even if the carrier frequency is high during the ordinary operation, stable starting can be achieved.

According to a third aspect of the invention, provided is a motor driving apparatus including current detecting means for detecting a current flowing in a motor, current phase angle setting means for outputting a setting value of a current phase angle of the motor, current command generating means for calculating and outputting a command value of the current of the motor so as to realize the current phase angle depending on the setting value from the current phase angle setting means, and current control means for controlling the current of the motor to the command value calculated by the current command generating means with reference to the detected current. The current phase angle setting means fixes the current phase angle at a predetermined value for a predetermined time after start of the motor. Hence, the efficiency can be maximum and stable starting can be achieved.

According to a fourth aspect of the invention, provided is a motor driving apparatus including current detecting means for detecting a current flowing in a motor, current phase angle setting means for outputting a setting value of a current phase angle of the motor, current command generating means for calculating and outputting a command value of the current of the motor so as to realize the current phase angle according to the setting value from the current phase angle setting means, and current control means for controlling the current of the motor to the command value calculated by the current command generating means with reference to the detected current. The current phase angle setting means determines the setting value of the current phase angle depending on the rotational speed of the motor, while changing the setting value continuously and smoothly depending on changes of the rotational speed. Hence, stable driving can be achieved even if the rotational speed fluctuates.

According to a fifth aspect of the invention, provided is a motor driving apparatus including current detecting means for detecting a current flowing in a motor, current phase angle setting means for outputting a setting value of a current phase angle of the motor, current command generating means for calculating and outputting a command value of the current of the motor so as to realize the current phase angle depending on the setting value from the current phase angle setting means, and current control means for controlling the current of the motor to the command value calculated by the current command generating means with reference to the detected current. The current phase angle setting means determines the setting value of the current phase angle depending on the load current of the motor, while changing the setting value continuously and smoothly depending on the change of the load current. Hence, stable driving can be achieved even if the load of the motor fluctuates.

According to a sixth aspect of the invention is a motor driving apparatus including current detecting means for detecting a current flowing in a motor, current phase angle setting means for outputting a setting value of a current phase angle of the motor, current command generating means for calculating and outputting a command value of the current of the motor so as to realize the current phase angle depending on the setting value from the current phase angle setting means, and current control means for controlling the detected current to the command value calculated by the current command generating means. The current phase angle setting means changes over the setting value of the current phase angle depending on elapsed time from start, while changing the setting value linearly and smoothly. Hence, stable driving can be achieved in spite of fluctuations of the motor rotational speed or load.

A better understanding of the invention will be obtained by reading the description of the invention below, with reference to the following drawings, in which:

Fig. 1 is a block diagram showing a configuration of a motor driving apparatus of the present invention;
Fig. 2 is a diagram showing an example of change of inductance value (q-axis) with respect to load current of DC brushless motor;
Fig. 3 is a diagram showing an example of change of inductance value (d-axis) with respect to load current of DC brushless motor;
Fig. 4 is a characteristic diagram showing an example of a method of setting a current control gain in a current control gain adjusting section of the invention;
Fig. 5 is a characteristic diagram showing an example of a method of setting a carrier frequency in carrier frequency changeover section of the invention;
Fig. 6 is a diagram showing an example of change in a motor efficiency with respect to current phase angle of brushless DC motor;
Fig. 7 is a characteristic diagram showing an example of a method of setting a current phase angle with respect to an operating rotational speed in a current phase angle determining section of the invention;
Fig. 8 is a characteristic diagram showing an example of a method of setting a current phase angle with respect to a load current in a current phase angle determining section of the invention;
Fig. 9 is a diagram showing an example of fluctuation of output torque with respect to a current phase angle of the brushless DC motor;
Fig. 10 is a characteristic diagram showing an example of a method of setting a current phase angle with respect to a rotational speed in a prior art; and
Fig. 11 is a characteristic diagram showing an example of a method of setting a current phase angle in current phase angle determining section of the invention.

Preferred embodiments of the motor driving apparatus of the invention are described in detail below with reference to the accompanying drawings.

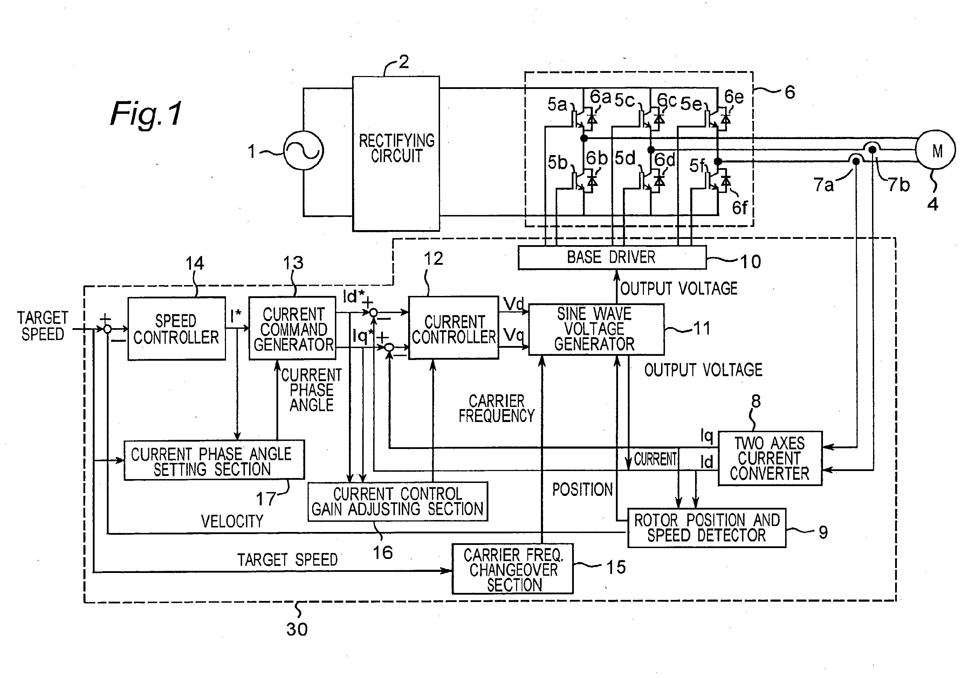

Fig. 1 is a block diagram showing a configuration of a motor driving apparatus of the invention. The motor driving apparatus includes a rectifying circuit 2 for converting an alternating-current voltage from an alternating-current power source 1 into a direct-current voltage, an inverter circuit 6 for converting the direct-current voltage from the rectifying circuit 2 into a desired alternating-current voltage to supply a driving voltage of the motor 4, and a control circuit 30 for controlling the inverter circuit 6.

The inverter circuit 6 has pairs of switching elements 5a to 5f and freewheeling diodes 6a to 6f.

The control circuit 30 includes a base driver 10, a sine wave voltage generator 11, a current controller 12, a current command generator 13, a speed controller 14, a carrier frequency changeover section 15, a current control gain adjusting section 16, a current phase angle determining section 17, a two axes current converter 8, and rotor position and speed detector 9.

Operation of the motor driving apparatus having such a configuration is described below.

Alternating-current voltage from the alternating-current power source 1 is rectified into a direct-current voltage by the rectifying circuit 2. The rectified direct-current voltage is converted into a three-phase alternating-current voltage by the inverter circuit 6, and is supplied to a brushless DC motor 4.

Outline of operation of the control circuit 30 is as follows.

A target speed in control of motor is entered from outside into the control circuit 30. A current command value for realizing the input target speed is generated in the current command generator 13. At this time, the current phase angle is set by the current phase angle setting section 17, and the set information is sent to the current command generator 13. The current controller 12 generates output voltage values Vd and Vq on the basis of the current commands Id$^*$ and Iq$^*$ generated in the current command generator 13 and the control signal from the current control gain adjusting section 16. Based on these output voltage values Vd and vq and the position information from the rotor position detector 9, the sine wave voltage generator 11 generates output voltage information which is supplied to the base driver 10. The base driver 10 generates a control signal for on/off control of the switching elements 5a to 5f of the inverter circuit 6 for obtaining a desired output voltage, based on the output voltage information from the sin wave voltage generator 11.

Operation of each portion in the motor driving apparatus is described in detail below.

The speed controller 14 receives a target speed in control of the motor 4 from outside and calculates the current command value I$^*$ in the following formula from the error of the target speed and present speed in order to realize its target speed. A method of the calculation is based on the general PI control system.

$$I^* = Gp\omega \times (\omega^* - \omega) + Gi\omega \times \sum(\omega^* - \omega) \qquad (1)$$

where $\omega^*$ is target speed, $\omega$ is present speed, Gp $\omega$ is speed control proportional gain, and Gi$\omega$ is integral gain.

The current command generator 13 calculates the d-axis current command Id$^*$ and q-axis current command Iq$^*$ in the following formula from the current command value I$^*$ calculated in the speed controller 14 and the current phase angle β determined by the current phase angle setting section 17.

$$Id^* = I^* \times \sin(\beta) \qquad (2)$$

$$Iq^* = I^* \times \cos(\beta) \qquad (3)$$

where β is a current phase angle.

The current detectors 7a and 7b detect phase currents (iu, iv) flowing in the winding of each phase of the motor 4 from the detected current. The two axes current converter 8 converts the phase currents iu and iv of the motor 4 detected by the current detectors 7a and 7b into two axes currents including the q-axis current Iq contributing to the magnet torque of the motor 4 and the d-axis current Id contributing to the magnetic flux, according to the following formula (4).

$$i_a = \sqrt{3/2} \times i_u$$

$$i_b = \sqrt{1/2} \times (i_u + 2 \times i_v)$$

$$\begin{bmatrix} i_d \\ i_q \end{bmatrix} = \begin{bmatrix} \cos(\theta) & \sin(\theta) \\ -\sin(\theta) & \cos(\theta) \end{bmatrix} \begin{bmatrix} i_a \\ i_b \end{bmatrix} \qquad (4)$$

Using the current commands Id* and Iq*, and the detected current values Id and Iq from the two axes current converter 8, the current controller 12, calculates from the following formula to realize the current command, and supplies output voltages Vd and Vq.

$$Vd = Gpd \times (Id^* - Id) + Gid \times \sum(Id^* - Id) \qquad (5)$$

$$Vq = Gpq \times (Iq^* - Iq) + Giq \times \sum(Iq^* - Iq) \qquad (6)$$

where Vd and vq are respectively d-axis voltage and q-axis voltage, Gpd and Gid are respectively d-axis current control proportional gain and integral gain, and Gpq and Giq are respectively q-axis current control proportional gain and integral gain.

The sine wave voltage generator 11 outputs a drive signal for driving the motor 4 to the base driver 10 based on information relating to the rotor magnetic pole position estimated by the rotor position and speed detector 9 so that the output voltages Vd and Vq may be output from the inverter circuit 6. The base driver 10 outputs a signal for driving the switching elements 5a to 5f to them according to the drive signal. Hence, the motor 4 is driven at the target speed.

The rotor position and speed detector 9 detects or estimates the position and speed of the rotor of the motor 4. From the currents detected by the current detectors 7a and 7b, the phase current (iu, iv, iw) flowing in the winding of each phase of the motor 4 is obtained. From the voltage output from the sine wave voltage generator 11, the phase voltage (vu, vv, vw) applied to the winding of each phase is obtained. In principle, from these values, the voltages eu, ev and ew induced in the winding of the respective phases are estimated in the following formulas (7), (8), and (9).

$$eu = vu - R \cdot iu - L \cdot d/dt(iu) \tag{7}$$

$$ev = vv - R \cdot iv - L \cdot d/dt(iv) \tag{8}$$

$$ew = vw - R \cdot iw - L \cdot d/dt(iw) \tag{9}$$

where R is resistance, L is inductance, and d/dt is a differential operator with respect to a time.

From these estimated induced voltages eu, ev and ew, the position and speed of the rotor are estimated. That is, the estimated angle θm recognized by the motor driving apparatus is corrected by using the error of the induced voltage so as to converge on the true value. From the estimated angle θm, an estimated speed ωm is also obtained.

Initially, the induced voltage reference value of each phase (eum, evm, ewm) is determined as follows.

$$eum = em \cdot \sin (\theta m + \beta T)$$

$$evm = em \cdot \sin (\theta m + \beta T - 120°) \tag{10}$$

$$ewm = em \cdot \sin (\theta m + \beta T - 240°)$$

where em (induced voltage amplitude) is determined by matching with the amplitude value of the estimated induced voltage eu, ev or ew.

Determined is deviation ε between induced voltage reference values (eum, evm, ewm) and estimated induced voltages (eu, ev, ew) thus determined. As shown in formula (11), deviation ε is obtained by subtracting the induced voltage reference value esm from the estimated induced voltage es.

$$\varepsilon = es - esm \ (s:phase \ u/v/w) \tag{11}$$

When this deviation is zero, the estimated angle θm is the true value. The estimated angle θm is corrected by using the deviation ε with PI operation or the like so that the deviation ε may converge on zero. By calculating the variation value of the estimated angle θm, the estimated speed ωm is obtained.

Operation of the current control gain adjusting section 16 is described.

Optimum values (G˜pd, G˜id, G˜pq, G˜iq) of control gains (Gpd, Gid, Gpq, Giq) of the current controller 12 are theoretically obtained in the following formulas by using characteristic values of the motor 4 owing to the response and stability of the current control loop.

$$\tilde{G}pd = 2 \times \omega \times \zeta \times Ld - R \tag{12}$$

$$\tilde{G}id = Ld \times \omega^2 \tag{13}$$

$$\tilde{G}pq = 2 \times \omega \times \zeta \times Lq - R \tag{14}$$

$$\tilde{G}iq = Lq \times \omega^2 \tag{15}$$

where ω is the current control angular frequency, R is motor resistance, and ζ is damping factor.

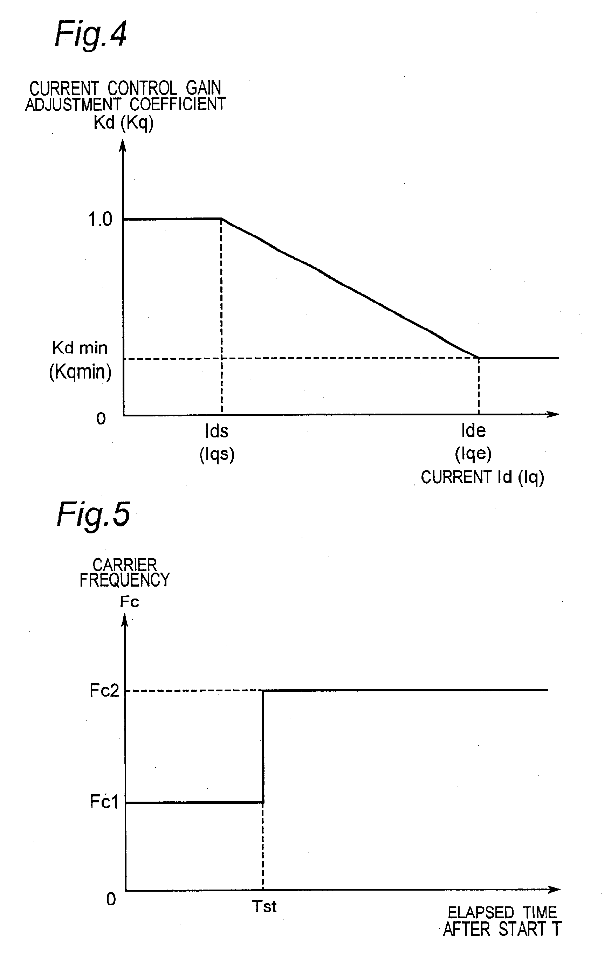

As seen from these formulas, the optimum values of control gains is approximately considered to be proportional to inductance values Ld and Lq of the brushless DC motor. Inductance values Ld and Lq vary depending on the current values Id and Iq flowing in the motor. That is, the inductance values Ld and Lq decrease due to magnetic saturation as the motor current increases as shown in Figs. 2 and 3. Hence, it can be considered that changing the current control gains similarly corresponding to changes of inductance values Ld and Lq which correspond to current values Id and Iq respectively as shown in Figs. 2 and 3 allows the motor current to be controlled almost optimally. According to this principle, the current control gain adjusting section 16 changes the current control gains Gd and Gq linearly with respect to the current values Id and Iq as shown in Fig. 4, so that the current control may be held optimally regardless of the load.

Fig. 4 shows a change of the current control gain adjustment coefficient Kd (or Kq) corresponding to the current value Id (or Iq). Herein, the following relation is established between the current control gain Gd and its adjustment coefficient Kd. It is also the same between the current control gain Gq and its adjustment coefficient Kq.

$$Gd = Kd \times Gd0 \qquad (16)$$

where Gd0 is maximum value of Gd.

Adjustment coefficient Kd shown in Fig. 4 may be expressed as follows (same as in the case of Kq).
If $I \leq Ids$, then

$$Kd = 1.0 \qquad (17a)$$

If $Ids < I \leq Ide$, then

$$Kd = \alpha \cdot I + \beta \qquad (17b)$$

where $\alpha = (Kdmin - 1)/(Ide - Ids)$, $\beta = 1 - \alpha \cdot Ids$,
If $I > Ide$, then

$$Kd = Kdmin \qquad (17c)$$

Operation of the carrier frequency changeover section 15 is described. The carrier frequency changeover section 15 controls the "carrier frequency" Fc which is a frequency for determining the switching pulse interval in PWM control of the switching elements 5a to 5f. In the case that the pulse with a duty ratio D is output, its pulse width W is expressed as follows.

$$W = D/Fc \qquad (18)$$

Therefore, the greater the carrier frequency, the smaller is the pulse width W. The pulse width W becoming small causes a problem of lowering of starting performance as explained in the prior art.

As the countermeasure to this problem, the carrier frequency changeover section 15 of the embodiment changes over the carrier frequency as shown in Fig. 5. That is, for a short while after start, it is designed to drive at a low carrier frequency Fc1, and after a specified time (Tst), the driving frequency is changed over to a higher carrier frequency Fc2 depending on the target speed. As a result, a stable starting is realized, and a driving at the carrier frequency which is desired to be used in an ordinary operation can be achieved after the driving is stabilized.

Operation of the current phase angle setting section 17 is described below.

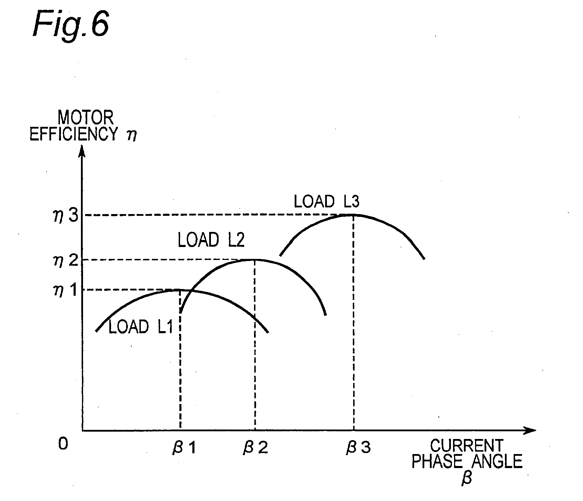

The current phase angle setting section 17 determines the phase angle of motor current (current phase angle). By varying the current phase angle, the motor efficiency of the brushless DC motor is changed. Fig. 6 is a diagram showing an example of changes of motor efficiency η to the current phase angle β of the brushless DC motor at three motor loads L1, L2 and L3 (L1 < L2 < L3) . As known from the diagram, there is a current phase angle for maximizing the motor efficiency at a certain load, and the current phase angle for maximizing the motor efficiency varies with the magnitude of the load. For example, in the case of the load L1, the motor efficiency reaches the maximum of η1 at the current phase angle β1, but in the case of the load L3, the motor efficiency reaches the maximum of η3 at the current phase angle β3. Thus, the current phase angle for maximizing the motor efficiency varies with the magnitude of the load. Therefore, in usual operation, preferably, the current phase angle should be set to the optimum value for obtaining the maximum efficiency at the load at that time.

To realize this, the current phase angle setting section 17 of the embodiment determines the current phase angle (3 β as follows at the operation rotational speed ω (corresponding to the target speed) and motor load current I (corresponding to the speed command I*).

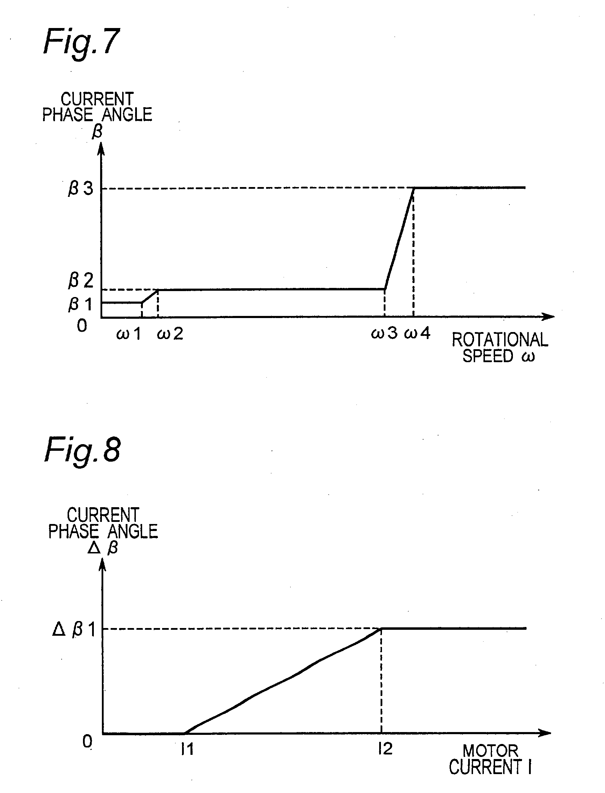

First, the current phase angle setting section 17 determines the current phase angle β as shown in Fig. 7 to the operation rotational speed ω. That is, in low speed region, the current phase angle β is set at the current phase angle β1 which is optimum upon start and at light load. In medium speed region, the current phase angle is set at the current phase angle β2 which is optimum at ordinary load. In high speed region, the current phase angle is set at the current phase angle β3 to realize the maximum rotational by a field weakening control.

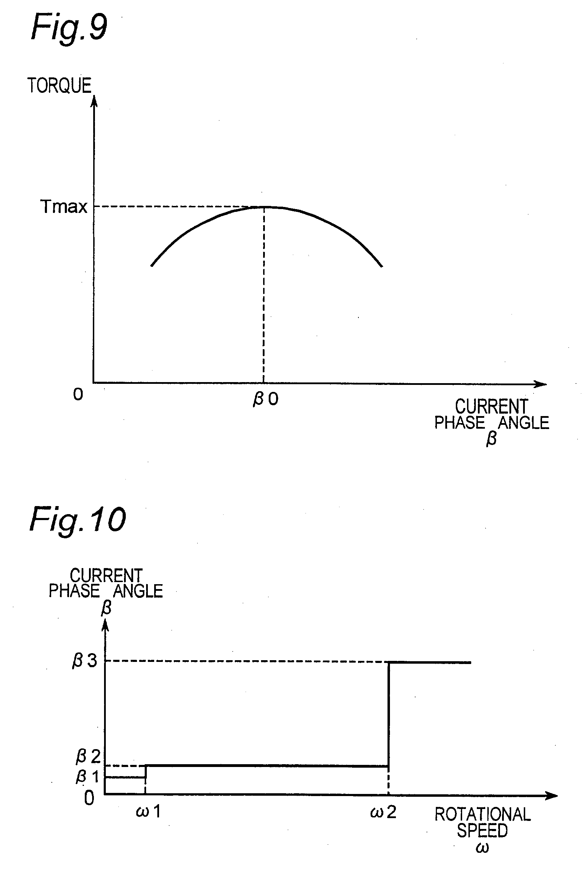

When the current phase angle β is changed abruptly as compared with the change of rotational speed, the output torque changes suddenly. Fig. 9 shows an example of fluctuation of output torque corresponding to the current phase angle. As shown in the diagram, the output torque fluctuates depending on the variation of the current phase angle β, and therefore if the current phase angle β is changed abruptly, the output torque fluctuates suddenly to cause an unstable driving. Fig. 10 shows a conventional setting method of the current phase angle. According to this method, the current phase angle is set for the purpose of enhancing the efficiency and increasing the maximum rotational speed. However, since the current phase angle is changed over in steps with respect to the rotational speed, if the rotational speed fluctuates, the torque changes significantly due to variation of the current phase angle, and the driving becomes unstable. To avoid such unstable phenomenon, the current phase angle setting section 17 of the embodiment changes the current phase angle smoothly and linearly enough with respect to the rotational speed, and hence stable acceleration or deceleration is realized without sudden change of torque. That is, as shown in Fig. 7, when changing over from the current phase angle β1 to β2, or from β2 to β3, a transition period of ω1 to ω2, or ω3 to

$\omega 4$ is provided to change the phase angle continuously and smoothly in this transition period.

Further, the current phase angle setting section 17 determines an additional current phase angle $\Delta\beta$. The additional current phase angle $\Delta\beta$ is determined so as to change linearly with respect to the change of the motor current (load current) I as shown in Fig. 8. From the additional current phase angle $\Delta\beta$ and the previously determined current phase angle $\beta$, the new current phase angle $\beta$ is determined according to formula (19).

$$\beta = \beta + \Delta\beta \qquad (19)$$

(that is, $\beta(\omega, I) = \beta(\omega) + \Delta\beta(I)$)

By thus setting the additional current phase angle $\Delta\beta$ depending on the motor current (load current) I, the current phase angle $\beta$ may be determined at a value of the phase angle that provides the maximum efficiency so as to be changed depending on the load as shown in Fig. 6. Further, as shown in Fig. 8, by setting the additional current phase angle $\Delta\beta$ so as to change linearly and smoothly with respect to the motor current (load current), the torque does not change suddenly and stable driving is realized in spite of load fluctuations.

In ordinary operation, the current phase angle $\beta$ is determined according to the rotational speed and motor current in the method described above so that the motor efficiency is the maximum.

On the other hand, upon start, it takes a certain time until the position estimate of the rotor by the rotor position and speed detector 9 converges. Therefore, the rotor position estimate value includes an error. Upon start, the current of the motor 4 fluctuates significantly. Therefore, if the current phase angle $\beta$ is set based on the rotational speed $\omega$ and load I similarly to ordinary operation, the current phase angle $\beta$ varies and the driving torque is not stable, and thus starting operation becomes unstable.

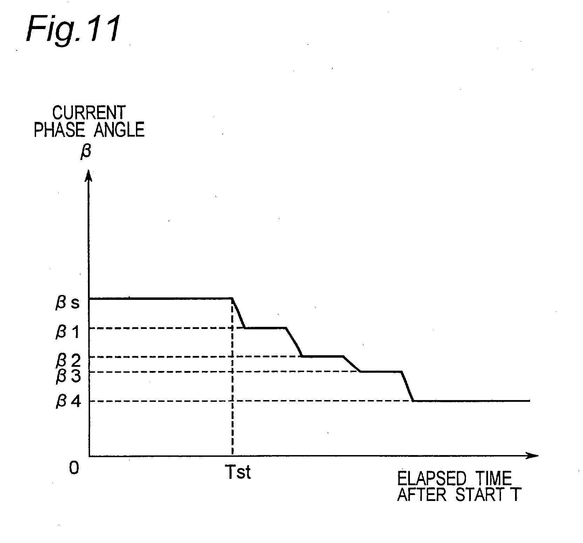

In this embodiment, the current phase angle setting section 17 in the motor driving apparatus determines the current phase angle $\beta$ as shown in Fig. 11 to solve such a problem. That is, during a specific time (Tst) after start, the current phase angle $\beta$ is fixed at a predetermined value ($\beta$s) . After the predetermined time (Tst) elapses, the current phase angle $\beta$ is sequentially set at values of phase angle providing the maximum efficiency (optimum values) $\beta 1$, $\beta 2$, $\beta 3$, $\beta 4$, according to the principle described in connection with Figs. 7 and 8. At this time, the current phase angle is changed gradually so as not to change suddenly. That is, the change of the current phase angle with respect to the time is smooth and linear. For example, when changing the current phase angle from $\beta 1$ to $\beta 2$, the phase angle is changed from $\beta 1$ to $\beta 2$ not suddenly in steps but continuously and smoothly. Hence, the torque fluctuation due to sudden change of the current phase angle can be suppressed, and stable driving can be realized.

Although in the embodiment two current detectors 7a and 7b for detecting the phase current of the motor are used, any other means for detecting the current flowing in the direct-current portion may be used.

Regardless of the speed control in which the speed of the motor 4 is forced to follow the target speed provided from outside in the embodiment, other speed controls may be used, for example, to control the torque of the motor 4.

Although the present invention has been described in connection with specified embodiments thereof, many other modifications, corrections and applications are apparent to those skilled in the art. Therefore, the present invention is not limited by the disclosure provided herein but limited only to the scope of the appended claims.

## Claims

1. A motor driving apparatus comprising:

   current detecting means (7a, 7b) for detecting a current flowing in a motor (4);
   current control means (12) for controlling the current flowing in the motor (4) to a predetermined value with reference to the detected current; and
   current control gain adjusting means (16) for changing a control gain in the current control means (12) according to an amplitude of the current flowing in the motor (4).

2. The motor driving apparatus according to claim 1, wherein the current control gain adjusting means (16) calculates the control gain based on a predetermined formula expressing the relation of the control gain and the amplitude of the current.

3. The motor driving apparatus according to claim 1 or 2, wherein the current control gain adjusting means (16) decreases the control gain as the current amplitude is larger, while increasing the control gain as the current amplitude is smaller.

4. A motor driving apparatus comprising:

   a plurality of switching elements (5a to 5f) for generating a voltage for driving a motor (4);
   base driver (10) for driving the plurality of switching elements (5a to 5f);
   voltage output means (11) for sending on and off signals for driving the switching elements (5a to 5f) to the base driver (10); and
   carrier frequency changeover means (15) for sending a carrier frequency for changing over on and off operations of the switching elements (5a to 5f) to the voltage output means (11),

wherein the carrier frequency changeover means (15) determines the carrier frequency at a first frequency for a predetermined time after start of the motor (4), and determines the carrier frequency at a second frequency after the predetermined time.

5.  The motor driving apparatus according to claim 4, wherein the first frequency of the carrier frequency determined by the carrier frequency changeover means (15) is smaller than the second frequency.

6.  A motor driving apparatus comprising:

    current detecting means (7a, 7b) for detecting a current flowing in a motor (4);
    current phase angle setting means (17) for outputting a setting value of a current phase angle of the motor (4),
    current command generating means (13) for calculating and outputting a command value of the current of the motor (4) so as to realize the current phase angle depending on the setting value from the current phase angle setting means (17); and
    current control means (12) for controlling the current of the motor (4) to the command value calculated by the current command generating means (13) with reference to the detected current,

    wherein the current phase angle setting means (17) fixes the current phase angle at a predetermined value for a predetermined time after start of the motor (4).

7.  A motor driving apparatus comprising:

    current detecting means (7a, 7b) for detecting a current flowing in a motor (4);
    current phase angle setting means (17) for outputting a setting value of a current phase angle of the motor (4);
    current command generating means (13) for calculating and outputting a command value of the current of the motor (4) so as to realize the current phase angle according to the setting value from the current phase angle setting means (17); and
    current control means (12) for controlling the current of the motor (4) to the command value calculated by the current command generating means (13) with reference to the detected current,

    wherein the current phase angle setting means (17) determines the setting value of the current phase angle depending on the rotational speed of the motor (4), while changing the setting value continuously and smoothly depending on changes of the rotational speed.

8.  The motor driving apparatus according to claim 7, wherein the current phase angle setting means (17) determines the setting value of the current phase angle at a current phase angle providing the maximum efficiency of the motor (4) which depends on the rotational speed of the motor (4).

9.  A motor driving apparatus comprising:

    current detecting means (7a, 7b) for detecting a current flowing in a motor (4);
    current phase angle setting means (17) for outputting a setting value of a current phase angle of the motor (4);
    current command generating means (13) for calculating and outputting a command value of the current of the motor (4) so as to realize the current phase angle depending on the setting value from the current phase angle setting means (17); and
    current control means (12) for controlling the current of the motor (4) to the command value calculated by the current command generating means (13) with reference to the detected current,

    wherein the current phase angle setting means (17) determines the setting value of the current phase angle depending on the load current of the motor (4), while changing the setting value continuously and smoothly depending on the change of the load current.

10. The motor driving apparatus according to claim 9, wherein the current phase angle setting means (17) determines the setting value of the current phase angle at a current phase angle providing the maximum efficiency of the motor (4) which depends on the load current of the motor (4).

11. A motor driving apparatus comprising:

    current detecting means (7a, 7b) for detecting a current flowing in a motor (4);
    current phase angle setting means (17) for outputting a setting value of a current phase angle of the motor (4);
    current command generating means (13) for calculating and outputting a command value of the current of the motor (4) so as to realize the current phase angle depending on the setting value from the current phase angle setting means (17); and
    current control means (12) for controlling the detected current to the command value calculated by the current command generating means (13),

wherein the current phase angle setting means (17) changes over the setting value of the current phase angle depending on elapsed time from start, while changing the setting value linearly and smoothly.

12. The motor driving apparatus according to any one of claims 1 to 11, wherein the motor (4) is a brushless DC motor.

Fig.1

## *Fig.2*

## *Fig.3*

## Fig.4

CURRENT CONTROL GAIN
ADJUSTMENT COEFFICIENT
Kd (Kq)

1.0

Kd min
(Kqmin)

0

Ids
(Iqs)

Ide
(Iqe)

CURRENT Id (Iq)

## Fig.5

CARRIER
FREQUENCY
Fc

Fc2

Fc1

0

Tst

ELAPSED TIME
AFTER START T

*Fig.6*

## Fig.7

CURRENT
PHASE ANGLE
β

β3

β2
β1
0

ω1  ω2

ω3 ω4

ROTATIONAL
SPEED ω

## Fig.8

CURRENT
PHASE ANGLE
Δβ

Δβ1

0

I1

I2

MOTOR
CURRENT I

14

## Fig.9

TORQUE

Tmax

0              β0              CURRENT
                              PHASE ANGLE
                                   β

## Fig.10

CURRENT
PHASE ANGLE
    β

β3

β2
β1

0      ω1              ω2      ROTATIONAL
                               SPEED
                                 ω

*Fig.11*